# EUROPÄISCHE PATENTSCHRIFT

(11) **EP 3 482 922 B1**
(45) Veröffentlichungstag und Bekanntmachung des Hinweises auf die Patenterteilung: **29.12.2021**
(21) Anmeldenummer: 18186208.7
(22) Anmeldetag: 30.07.2018
(51) Int. Cl.: B29D 30/72, B60C 13/00

(54) **VERFAHREN ZUR HERSTELLUNG EINES FAHRZEUGREIFENS UND FAHRZEUGREIFEN**
METHOD FOR PRODUCING A TYRE FOR A VEHICLE AND TYRE FOR A VEHICLE
PROCÉDÉ DE FABRICATION D'UN PNEU DE VÉHICULE ET PNEU DE VÉHICULE

(30) Priorität: 10.11.2017 DE 102017220058
(43) Veröffentlichungstag der Anmeldung: 15.05.2019
(73) Patentinhaber: Continental Reifen Deutschland GmbH, 30165 Hannover (DE)
(72) Erfinder: Popean, Radu, 30826 Garbsen (DE)
(74) Vertreter: Continental Corporation

(56) Entgegenhaltungen:
- EP-A1- 2 546 051
- DE-A1-102007 028 192
- DE-A1-102016 206 556
- DE-B3-102008 021 928
- JP-A- 2005 164 655

## Beschreibung

Die Erfindung betrifft ein Verfahren zur Herstellung eines Fahrzeugreifens.

Es ist bekannt, den Fahrzeugreifen nach der Reifenproduktion mit einer Markierung oder einem visuellen Code zu versehen. Das Aufbringen des Codes erfolgt im Allgemeinen durch ein Einprägen in einen fertig hergestellten Fahrzeugreifen. Das Aufbringen des Codes ist i.a. nur mit einem hohen Herstellungsaufwand möglich.

Gemäß DE 10 2007 028 192 A1 und EP 2 546 051 A1 ist vorgesehen, eine Materiallage mit aufgebrachten Informationen auf eine Oberfläche eines Formsegments einer Vulkanisationsvorrichtung für Fahrzeugreifen einzusetzen bzw. aufzusetzen, um die Materiallage im Vulkanisationsprozess mit dem Fahrzeugreifen stoffschlüssig zu verbinden. In JP 2005 164 655 A und DE 10 2016 206 556 A1 sind weiterhin QR-Codes gezeigt, die als Code auf der Seitwand eines Fahrzeugreifens angeordnet sind und die fahrzeugspezifische Informationen enthalten.

Der Erfindung liegt die Aufgabe zugrunde, ein verbessertes Verfahren zur Herstellung von Fahrzeugreifen bereitzustellen.

Insbesondere soll das Aufbringen eines visuellen Codes auf einen Fahrzeugreifen verbessert werden.

Diese Aufgabe wird durch die Verfahrensschritte des Anspruchs 1 gelöst.

Ein Vorteil der Erfindung ist insbesondere darin zu sehen, dass durch das Verfahren die Herstellung von Fahrzeugreifen verbessert wird.

Außerdem wird mit dem Verfahren die Zykluszeit zur Herstellung der Fahrzeugreifen wesentlich verkürzt.

Die Materiallagen mit dem visuellen Code werden als Vormaterial in einem gesonderten Herstellungsprozess produziert. Das Einsetzen der Materiallage in die Vulkanisationsvorrichtung lässt sich innerhalb weniger Sekunden durchführen.

Dadurch wird die Zykluszeit an den Vulkanisationsvorrichtungen nur geringfügig beeinträchtigt. Ein weiterer Vorteil besteht darin, dass der visuelle Code auf der Seitenwand des Reifens mit einem hohen Kontrast erscheint, so dass dieser sehr gut mit einem elektronischen Lesegerät gelesen werden kann. Gegenüber dem Eingravieren eines QR-Codes in die Seitenwand bietet das neue Herstellungsverfahren ebenfalls den Vorteil, dass die Seitenwand bzw. das Material der Seitenwand in keiner Weise beeinträchtigt oder geschwächt wird.

Erfindungsgemäß ist vorgesehen, dass bei Schritt a) ein visueller Code in Form eines individuellen QR-Codes aufgebracht wird,

wobei die Reifeninformationen auf dem QR-Code eine Vielzahl von artikelspezifischen Informationen und reifenindividuellen Informationen für den Fahrzeugreifen umfassen. Der QR-Code kann z.B. an der Vulkanisationsvorrichtung auf die Materiallage gedruckt werden. Dadurch können ebenfalls die reifenindividuellen Daten, wie beispielsweise die Seriennummer und das Herstellungsdatum den Informationen auf dem QR-Code hinzugefügt werden. Es ist dadurch nicht mehr notwendig das Herstellungsdatum oder die Seriennummer beispielsweise über einen Wechselstempel in den Fahrzeugreifen einzuprägen.

In einer weiteren vorteilhaften Weiterbildung der Erfindung ist vorgesehen, dass die artikelspezifischen Informationen zumindestens Informationen zur Reifengröße und zum Reifentyp umfassen.

Diese Informationen sind insbesondere für den Fahrzeughersteller erforderlich, wenn der Hersteller die Fahrzeuge mit den Reifen bestückt.

Erfindungsgemäß ist vorgesehen, dass die reifenindividuellen Informationen zumindestens Informationen zur Seriennummer des Fahrzeugreifens und zum Herstellungsdatum des Fahrzeugreifens umfassen.

Diese reifenindividuellen Daten sind bei jedem hergestellten Reifen unterschiedlich. Das Herstellungsdatum des Fahrzeugreifen ist insbesondere für den Fahrzeughalter wichtig.

In einer weiteren vorteilhaften Weiterbildung der Erfindung ist vorgesehen, dass bei Schritt a) das Aufdrucken des visuellen Codes mit einer Siebdruck-Technik erfolgt.

Mit der Siebdruck-Technik lässt sich der QR-Code optimal auf die Materiallage aufbringen. Es wird dabei ein hoher Kontrast zwischen der aufgebrachten Farbe und der Farbe der Materiallage realisiert.

Erfindungsgemäß ist vorgesehen, dass bei Schritt a) das Aufdrucken des visuellen Codes mit einer hitzebeständigen Farbe erfolgt.

Dadurch wird gewährleistet, dass der QR-Code nach der Reifenvulkanisation weiterhin einen hohen Kontrast zwischen der Farbe und der Oberfläche der Materiallage aufweist.

Erfindunsgemäß ist vorgesehen, dass nach Schritt d) die Materiallage mit dem Code in die Oberseite der Seitenwand des Fahrzeugreifens eingelassen ist.

Dadurch schließt die Oberseite der Materiallage mit dem QR-Code mit der Oberseite der übrigen Seitenwand bündig ab.

In einer weiteren vorteilhaften Weiterbildung der Erfindung ist vorgesehen, dass bei Schritt
a) die Materiallage aus einem Elastomer besteht.

Dadurch wird die Dauerhaltbarkeit der Seitenwand des Fahrzeugreifens in keiner Weise beeinträchtigt.

In einer weiteren vorteilhaften Weiterbildung der Erfindung ist vorgesehen, dass bei Schritt
a) die Materiallage im Wesentlichen quadratisch ist und eine Flächenabmessung zwischen 1 cm² und 16 cm² aufweist.

Dadurch lässt sich der QR-Code auf der Seitenwand optimal mit einem elektronischen Lesegerät erfassen und auslesen.

In einer weiteren vorteilhaften Weiterbildung der Erfindung ist vorgesehen, dass der QR-Code zumindestens Informationen zum produzierenden Reifenwerk und zum Fahrzeughersteller, für den der Fahrzeugreifen bestimmt ist, umfasst.

Dadurch werden mit dem QR-Code alle wichtigen Informationen zu einem Fahrzeugreifen auf einfache Weise bereit gestellt.

Anhand eines Ausführungsbeispieles soll die Erfindung näher erläutert werden. Es zeigt:
- Fig. 1 :: eine Materiallage mit einem QR-Code
- Fig. 2 :: einen Abschnitt einer Seitenwand eines Fahrzeugreifens mit einem QR-Code

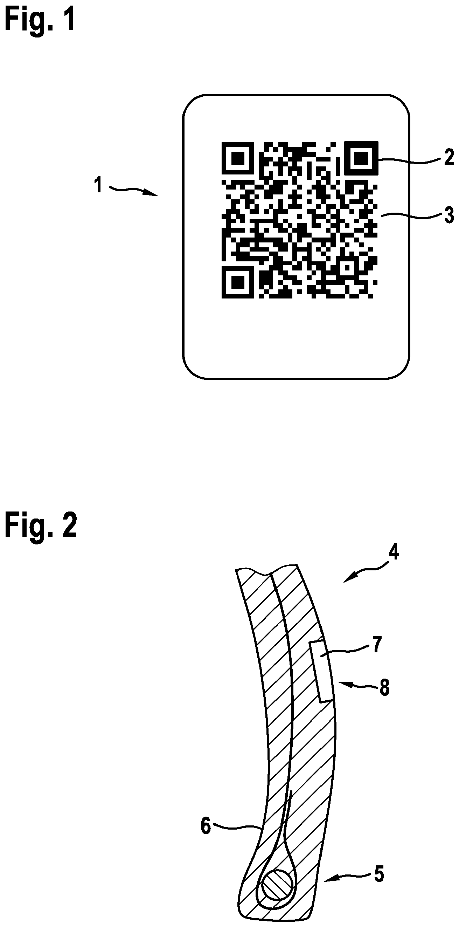

Die Fig.1 zeigt schematisch eine Materiallage mit einem QR-Code.

Die Materiallage 1 ist bei dieser Ausführung wie ein quadratischer Flicken mit einer dünnen Materiallage ausgeführt. Die Materiallage hat beispielsweise eine weiße, schwarze oder farbige Grundfarbe 3. Auf diese Materiallage 1 wird der QR-Code mit einer hitzebeständigen Farbe 2 mit einem Siebdruckverfahren aufgedruckt. Die Kontrastfarbe 2 könnte ebenfalls schwarz, weiß oder farbig ausgeführt werden, so dass sich ein guter Kontrast zur Materialfarbe der Materiallage ergibt. Es ist ebenfalls denkbar, dass die Materiallage eine graue Grundfarbe aufweist und die Kontrastfarbe 2 farbig gestalltet ist. Die Farbe ist hitzebeständig, so dass sie ihren Farbton nach der Reifenvulkanisation nicht mehr wesentlich verändert. Die Materiallage mit dem QR-Code kann beispielsweise direkt einer Reifenvulkanisations-Vorrichtung mit dem dargestellten QR-Code bedruckt werden. Anschließend wird diese Materiallage auf ein Formsegment platziert, welches vorzugsweis eine Seitenwandschale der Vulkanisationsform ist. Die Materiallage 1 wird unter Reifenfachmännern auch als "Vulkanette" bezeichnet.

Ein voarb hergestellter Reifenrohling wird anschließend in der Vulkanisationsvorrichtung angeordnet, wobei anschließend die Reifenvulkanisation nach einem herkömmlichen Verfahren erfolgt. Beim Schließen der Formsegmente wird die Materiallage mit dem QR-Code in die Seitenwand des Reifenrohlings hineingedrückt. Nach der Reifenvulkanisation ist die Materiallage, die vorzugsweise aus einem Elatomer besteht, ein integraler Bestandteil des Fahrzeugreifens.

Die Fig. 2 zeigt schematisch einen Abschnitt einer Seitenwand eines Fahrzeugreifens in einer Radialschnittansicht. Die Seitenwand 4 des Fahrzeugreifens weist einen Reifenwulst 5 mit einem Reifenkern und einer Reifeninnenseite 6 auf. Die Materiallage 7 mit dem QR-Code ist auf der Außenseite der Seitenwand 4 angeordnet. Die Materiallage 7 ist ein integraler Bestandteil der Seitenwand, wobei die Materialoberfläche 8 der Materiallage bündig mit der restlichen Oberfläche der Seitenwand 4 abschließt. Die Materialdicke der Materiallage 7 ist sehr dünn und beträgt zwischen 1 und 5 mm. Die Materiallage 7 ist vorzugsweise im oberen Drittel der Seitenwand angeordnet, um das Auslesen des QR-Codes zu vereinfachen.

Weitere artikelspezifische Informationen für einen Fahrzeugreifen sind insbesondere der Geschwindigkeitsindex, die Traglast für den Fahrzeugreifen oder die Information, ob es sich um einen Sommer- oder um einen Winterreifen handelt. Zu den reifenindividuellen Informationen zählen außerdem das Herstellungsdatum für den Fahrzeugreifen. Die reifenindividuellen Informationen haben einen Anteil von weniger als 30% bis 40% bezogen auf die Summe von artikelspezifischen und reifenindividuellen Informationen. Die Informationen, die auf dem QR-Code enthalten sind, können auf einfache Weise mit einer Kamera vom Fahrzeughersteller von Werkstätten oder von Endkunden ausgelesen werden.

### Bezugszeichenliste (ist Teil der Beschreibung)

- 1: Materiallage mit aufgedruckten QR-Code
- 2: Hitzebeständige Farbe (Kontrastfarbe zur Materiallage)
- 3: Farbe der Materiallage
- 4: Seitenwand eines Fahrzeugreifens
- 5: Reifenwulst mit Reifenkern
- 6: Reifeninnenseite
- 7: Materiallage mit QR-Code
- 8: Materialoberfläche mit QR-Code

## Patentansprüche

1. Verfahren zur Herstellung eines Fahrzeugreifens mit folgenden Schritten:
a) Herstellen einer Materiallage (1),
wobei die Materiallage (1) mit einem visuellen Code bedruckt wird, wobei das Aufdrucken des visuellen Codes mit einer hitzebeständigen Farbe erfolgt und ein visueller Code in Form eines individuellen QR-Codes aufgebracht wird;
wobei der Code eine Vielzahl von Reifen-Informationen umfasst, wobei die Reifeninformationen auf dem QR-Code eine Vielzahl von artikelspezifischen Informationen und reifenindividuellen Informationen für den Fahrzeugreifen umfassen, wobei, die reifenindividuellen Informationen zumindestens Informationen zur Seriennummer des Fahrzeugreifens und zum Herstellungsdatum des Fahrzeugreifens umfassen,
b) Einsetzen der Materiallage (1) in eine Vulkanisationsvorrichtung für Fahrzeugreifen, wobei die Materiallage (1) auf die Oberfläche von einem Formsegment zum Formen der Seitenwände (4) des Fahrzeugreifen eingesetzt wird,
c) Anordnen eines Reifenrohlings in die Vulkanisationsvorrichtung,
d) Zusammenfahren von Formsegmenten der Vulkanisationsvorrichtung und Vulkanisieren des Reifenrohlings mit der Vulkanisationsvorrichtung,
wobei die Materiallage (1) stoffschlüssig mit einer Seitenwand (4) des Fahrzeugreifens verbunden wird,
wobei die Materiallage (1) nach Schritt d) mit dem Code in die Oberseite der Seitenwand (4) des Fahrzeugreifens eingelassen ist, so dass die Oberseite der Materiallage (1) mit dem QR-Code mit der Oberseite der übrigen Seitenwand bündig abschließt,
e) Entnahme des vulkanisierten Fahrzeugreifens aus der Vulkanisationsvorrichtung, wobei der visuelle Code auf einer Seitenwand (4) sichtbar ist und die Reifeninformationen mit einem elektronischen Lesegerät ausgelesen werden können,
f) Fertigstellen des Fahrzeugreifens mit weiteren Schritten.

2. Verfahren nach einem der vorhergehenden Ansprüche,
**dadurch gekennzeichnet, dass**
die artikelspezifischen Informationen zumindestens Informationen zur Reifengröße und zum Reifentyp umfassen.

3. Verfahren nach einem der vorhergehenden Ansprüche,
**dadurch gekennzeichnet, dass**
bei Schritt a) das Aufdrucken des visuellen Codes mit einem Siebdruck-Technik erfolgt.

4. Verfahren nach einem der vorhergehenden Ansprüche,
**dadurch gekennzeichnet, dass**
bei Schritt a) die Materiallage (1) aus einem Elastomer besteht.

5. Verfahren nach einem der vorhergehenden Ansprüche,
**dadurch gekennzeichnet, dass**
bei Schritt a) die Materiallage (1) im Wesentlichen quadratisch ist und eine Flächenabmessung zwischen 1 cm² und 16 cm² aufweist.

6. Fahrzeugreifen mit einer Reifenkarkasse, Reifenwülsten (5), einem Laufstreifen und zwei Seitenwänden (4), wobei mindestens eine Seitenwand (4) eine Materiallage (7) mit einem visuellen Code aufweist, wobei die Materiallage (1) mit dem visuellen Code bedruckt ist, und die Materiallage (1) stoffschlüssig mit der Seitenwand (4) des Fahrzeugreifens verbunden ist,
**dadurch gekennzeichnet, dass**
die Materiallage (4) mit einem Verfahren nach Anspruch 1 in die Seitenwand (4) des Fahrzeugreifens eingebracht wird,
wobei der visuelle Code mit einer hitzebeständigen Farbe aufgedruckt ist und ein visueller Code in Form eines individuellen QR-Codes aufgebracht ist;
wobei der Code eine Vielzahl von Reifen-Informationen umfasst, wobei die Reifeninformationen auf dem QR-Code eine Vielzahl von artikelspezifischen Informationen und reifenindividuellen Informationen für den Fahrzeugreifen umfassen, wobei, die reifenindividuellen Informationen zumindestens Informationen zur Seriennummer des Fahrzeugreifens und zum Herstellungsdatum des Fahrzeugreifens umfassen, und
wobei die Materiallage (1) mit dem Code in die Oberseite der Seitenwand (4) des Fahrzeugreifens eingelassen ist, so dass die Oberseite der Materiallage (1) mit dem QR-Code mit der Oberseite der übrigen Seitenwand bündig abschließt.

## Claims

1. Method for producing a vehicle tyre with the following steps:
a) producing a material ply (1),
wherein the material ply (1) is printed with a visual code, wherein the printing on of the visual code is performed with a heat-resistant ink and a visual code is applied in the form of an individual QR code; wherein the code comprises a multitude of information about the tyre, wherein the information about the tyre on the QR code comprises a multitude of article-specific information and tyre-individual information for the vehicle tyre, wherein the tyre-individual information comprises at least information on the serial number of the vehicle tyre and on the production date of the vehicle tyre,
b) placing the material ply (1) into a vulcanizing device for vehicle tyres, wherein the material ply (1) is placed onto the surface of a mould segment for moulding the sidewalls (4) of the vehicle tyre,
c) arranging the green tyre in the vulcanizing device,
d) moving mould segments of the vulcanizing device together and vulcanizing the green tyre with the vulcanizing device,
wherein the material ply (1) is connected to a sidewall (4) of the vehicle tyre in a material-bonding manner,
wherein, after step d), the material ply (1) with the code has been let into the upper side of the sidewall (4) of the vehicle tyre, so that the upper side of the material ply (1) with the QR code finishes flush with the upper side of the rest of the sidewall,
e) removing the vulcanized vehicle tyre from the vulcanizing device, wherein the visual code is visible on a sidewall (4) and the information about the tyre can be read out by an electronic reader,
f) completing the vehicle tyre with further steps.

2. Method according to one of the preceding claims, **characterized in that**
the article-specific information comprises at least information on the tyre size and the tyre type.

3. Method according to one of the preceding claims, **characterized in that**
in step a), the printing on of the visual code is performed by a screen printing technique.

4. Method according to one of the preceding claims, **characterized in that**
in step a), the material ply (1) consists of an elastomer.

5. Method according to one of the preceding claims, **characterized in that**
in step a), the material ply (1) is substantially square and has an area of a size between 1 cm² and 16 cm².

6. Vehicle tyre with a tyre carcass, tyre beads (5), a tread and two sidewalls (4), wherein at least one sidewall (4) has a material ply (7) with a visual code, wherein the material ply (1) has been printed with the visual code, and the material ply (1) has been connected to the sidewall (4) of the vehicle tyre in a material-bonding manner,
**characterized in that**
the material ply (4) is introduced into the sidewall (4) of the vehicle tyre by a method according to Claim 1,
wherein the visual code has been printed on with a heat-resistant ink and a visual code in the form of an individual QR code has been applied;
wherein the code comprises a multitude of information about the tyre, wherein the information about the tyre on the QR code comprises a multitude of article-specific information and tyre-individual information for the vehicle tyre, wherein the tyre-individual information comprises at least information on the serial number of the vehicle tyre and on the production date of the vehicle tyre, and
wherein the material ply (1) with the code has been let into the upper side of the sidewall (4) of the vehicle tyre, so that the upper side of the material ply (1) with the QR code finishes flush with the upper side of the rest of the sidewall.

## Revendications

1. Procédé de fabrication d'un pneumatique de véhicule, ledit procédé comprenant les étapes suivantes :
a) produire une couche de matériau (1),
la couche de matériau (1) étant imprimée avec un code visuel, l'impression du code visuel étant effectuée avec une encre résistant à la chaleur et un code visuel étant appliqué sous la forme d'un code QR individuel ; le code comprenant un grand nombre d'informations relatives au pneumatique, les informations relatives au pneumatique du code QR comprenant un grand nombre d'informations spécifiques à l'article et des informations individuelles relatives au pneumatique de véhicule, les informations individuelles relatives au pneumatique comprenant au moins des informations relatives au numéro de série du pneumatique de véhicule et à la date de fabrication du pneumatique de véhicule,
b) insérer la couche de matériau (1) dans un dispositif de vulcanisation de pneumatiques de véhicule, la couche de matériau (1) étant insérée sur la surface d'un segment de moulage destiné à mouler les parois latérales (4) du pneumatique de véhicule,
c) disposer une ébauche de pneumatique dans le dispositif de vulcanisation,
d) réunir des segments de moule du dispositif de vulcanisation et vulcaniser l'ébauche de pneumatique avec le dispositif de vulcanisation,
la couche de matériau (1) étant reliée par une liaison de matière à une paroi latérale (4) du pneumatique de véhicule,
la couche de matériau (1) étant incorporée après l'étape d) avec le code dans le côté supérieur de la paroi latérale (4) du pneumatique de véhicule de sorte que le côté supérieur de la couche de matériau (1) pourvue du code QR affleure le côté supérieur de la paroi latérale restante,
e) retirer le pneumatique de véhicule vulcanisé du dispositif de vulcanisation, le code visuel étant visible sur une paroi latérale (4) et l'information relative au pneumatique pouvant être lue avec un dispositif de lecture électronique,
f) achever le pneumatique du véhicule avec des étapes supplémentaires.

2. Procédé selon l'une des revendications précédentes,
**caractérisé en ce que**
les informations spécifiques à l'article comprennent au moins des informations relatives à la taille et au type de pneumatique.

3. Procédé selon l'une des revendications précédentes,
**caractérisé en ce que**
l'impression du code visuel à l'étape a) est effectuée par sérigraphie.

4. Procédé selon l'une des revendications précédentes,
**caractérisé en ce que**
à l'étape a) la couche de matériau (1) comprend un élastomère.

5. Procédé selon l'une des revendications précédentes,
**caractérisé en ce que**
à l'étape a) la couche de matériau (1) est sensiblement carrée et a une dimension surfacique comprise entre 1 cm² et 16 cm².

6. Pneumatique de véhicule comprenant une carcasse de pneumatique, des talons de pneumatique (5), une bande de roulement et deux parois latérales (4), au moins une paroi latérale (4) comportant une couche de matériau (7) pourvue d'un code visuel, la couche de matériau (1) étant imprimée avec le code visuel, et la couche de matériau (1) étant reliée par une liaison de matière à la paroi latérale (4) du pneumatique de véhicule, **caractérisé en ce que**
la couche de matériau (4) est introduite dans la paroi latérale (4) du pneumatique de véhicule à l'aide d'un procédé selon la revendication 1,
le code visuel est imprimé avec une encre résistante à la chaleur et un code visuel étant appliqué sous la forme d'un code QR individuel ;
le code comprenant un grand nombre d'informations relatives au pneumatique, les informations relatives au pneumatique du code QR comprenant un grand nombre d'informations spécifiques à l'article et d'informations individuelles relatives au pneumatique de véhicule, les informations individuelles relatives au pneumatique comprenant au moins des informations sur le numéro de série du pneumatique de véhicule et la date de fabrication du pneumatique de véhicule, et
la couche de matériau (1) pourvue du code étant incorporée dans le côté supérieur de la paroi latérale (4) du pneumatique de véhicule de sorte que le côté supérieur de la couche de matériau (1) pourvue du code QR affleure le côté supérieur de la paroi latérale restante.
